# EUROPEAN PATENT SPECIFICATION

(11) **EP 1 825 755 B1**
(45) Date of publication and mention of the grant of the patent: **28.11.2012**
(21) Application number: 07102184.4
(22) Date of filing: 12.02.2007
(51) Int. Cl.: A21B 1/28, A21B 1/48

(54) **Oven for industrial cooking of foodstuffs, particularly bread, pizzas or the like**
Ofen zum industriellen Backen von Nahrungsmitteln, insbesondere von Brot, Pizza und Ähnlichem
Four pour cuisson industrielle de denrées alimentaires, spécialement le pain, les pizzas et similaires

(30) Priority: 28.02.2006 IT MO20060072
(43) Date of publication of application: 29.08.2007
(73) Proprietor: C.L.M. S.r.l., 31043 Fontanelle (IT)
(72) Inventor: PAPA, Gianfranco, 31020, SAN VENDEMIANO TV (IT)
(74) Representative: Modiano, Micaela Nadia

(56) References cited:
- EP-A- 0 456 594
- EP-A- 1 356 734
- WO-A-2006/125475
- FR-A- 2 357 178
- FR-A- 2 600 312
- FR-A- 2 697 722
- GB-A- 875 026

## Description

The present invention relates to an oven for industrial cooking of foodstuffs, particularly bread, pizzas or the like.

Many kinds of oven dedicated to the cooking of foodstuffs are known.

In particular, the industrial production of pizzas, which are mostly distributed frozen after precooking, uses ovens which are constituted generally by a heated tunnel into which the pizzas are made to advance on a system of conveyor belts.

The architecture of traditional ovens can be of different types depending on the type of heating system and cooking system used: wood-fired, methane gas-fired, or combined, i.e., with simultaneous combustion of wood and methane gas.

In almost all known ovens, in any case, there is a combustion chamber inside which the combustible substances are burned and the hot combustion gases are formed and subsequently directed into the tunnel in which the pizzas advance in order to heat them and cook them.

Once they have struck the pizzas, the hot gases exit from the oven through a series of stacks arranged at the top of the tunnel and proximate to the supporting surface of the pizzas formed by the upper advancing portion of the conveyor belt.

These known types of oven are not free from drawbacks, including the fact that they are particularly lossy in terms of energy.

The heat transferred by the gases to the pizzas that are advancing in the tunnel is in fact relatively modest if compared with the heating value that said gases have.

In practice, the hot gases reach the exit stacks very rapidly, limiting total heat exchange; this is demonstrated by the fact that usually the gases exit from the tunnel still at a rather high temperature.

The fact is also stressed that the organoleptic characteristics of the pizzas obtained by cooking with gas-fired ovens are believed by connoisseurs to be of flower quality than those of pizzas cooked in wood-fired ovens.

However, one must bear in mind that wood-fired ovens are more complex from a structural and architectural standpoint with respect to gas-fired ones; while gas combustion is performed by means of a conventional electronically-controlled burner, combustion in wood-fired ovens requires the presence of ducts for introducing combustion air and doors for accessing the combustion chamber, through which the pieces of wood are inserted manually by an operator.

Moreover, one must not ignore the fact that the manual insertion of the wood entrails the risk that the operator might come into contact with the fire.

Besides, wood-fired ovens entail substantial costs during production and installation as well as for management and maintenance; in this regard, the fact is stressed that these ovens require many cleaning actions aimed in particular at removing the ash produced by the burnt wood, and such actions can be performed only when the oven is off and therefore limit the production capacity of the system.

GB 875 026 A discloses a continuous gas-burning cooking oven comprising a heat insulated tunnel and conveyor belt for continuous movement to convey products through the tunnel, a first series of radiant surface gas burners mounted in the tunnel below the conveyor belt and a second series of radiant surface gas burners counted in the tunnel above the conveyor belt, and a down-draught suction system including channels arranged at the bottom of the tunnel and communicating with a draught passage extending lengthwise of the oven outside the tunnel.

The aim of the present invention is to eliminate the above mentioned drawbacks of the background art, by providing an oven for the industrial cooking of foodstuffs, particularly bread, pizzas or the like, which allows to optimize the transmission of heat within the oven, avoiding unnecessary energy waste.

Within this aim, an object of the present invention is to provide an oven that allows, if necessary, to produce foodstuffs having high-level organoleptic characteristics.

Another object of the present invention is to provide an oven that is particularly convenient from an economic standpoint, allowing to reduce greatly production, installation, management and labor costs with respect to traditional ovens.

Another object of the present invention is to provide an oven that allows to work in conditions of maximum safety for the protection of the staff working in the vicinity.

Another object of the present invention is to provide an oven with a structure which is simply, relatively easy to provide in practice, safe in use, effective in operation, and has a relatively low cost.

In accordance with the invention, there is provided an oven for the industrial cooking of foodstuffs, as defined in the appended claims.

Further characteristics and advantages of the present invention will become better apparent from the following detailed description of a preferred but not exclusive embodiment of an oven for the industrial cooking of foodstuffs, particularly bread, pizzas or the like, illustrated by way of non-limiting example in the accompanying drawings, wherein:
Figure 1 is a side view of the oven according to the invention;
Figure 2 is a plan view of the oven according to the invention;

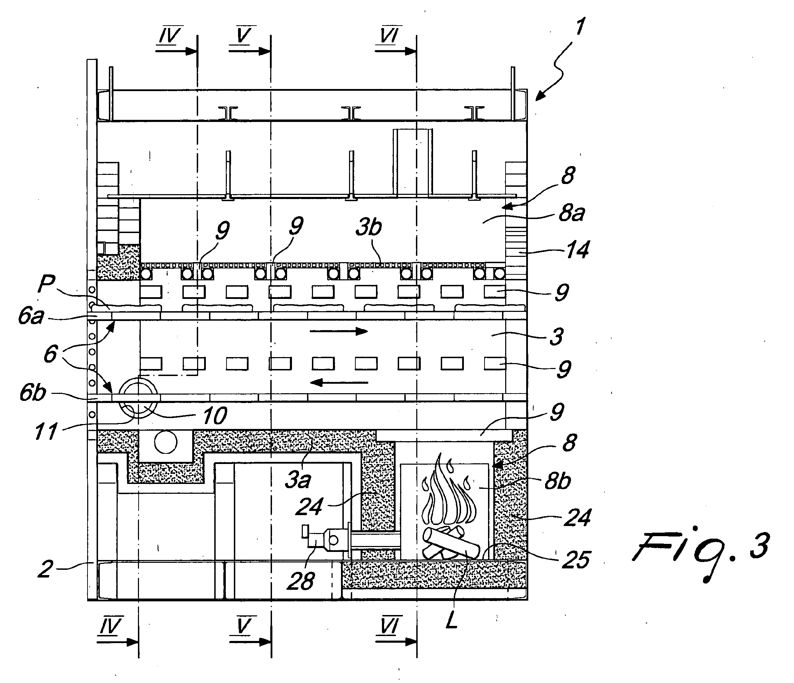

Figure 3 is a longitudinal sectional view of a portion of the oven according to the invention;

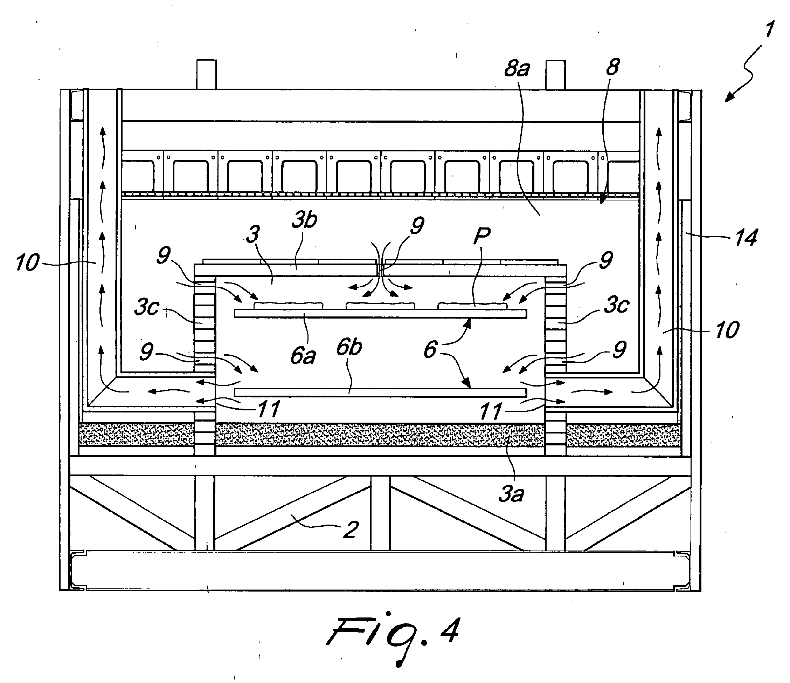

Figure 4 is a sectional view, taken along the line IV-IV of Figure 3;

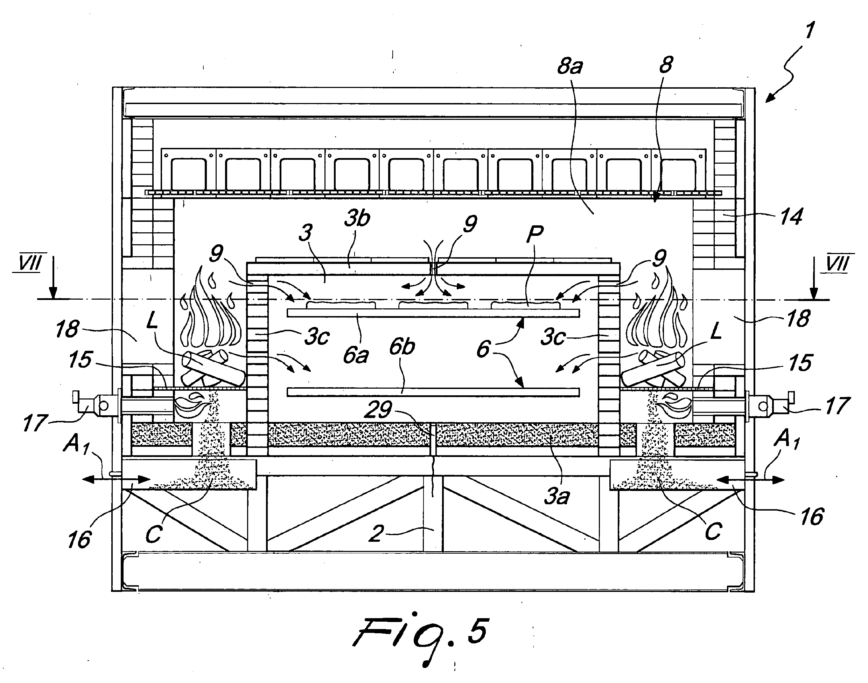

Figure 5 is a sectional view, taken along the line V-V of Figure 3;

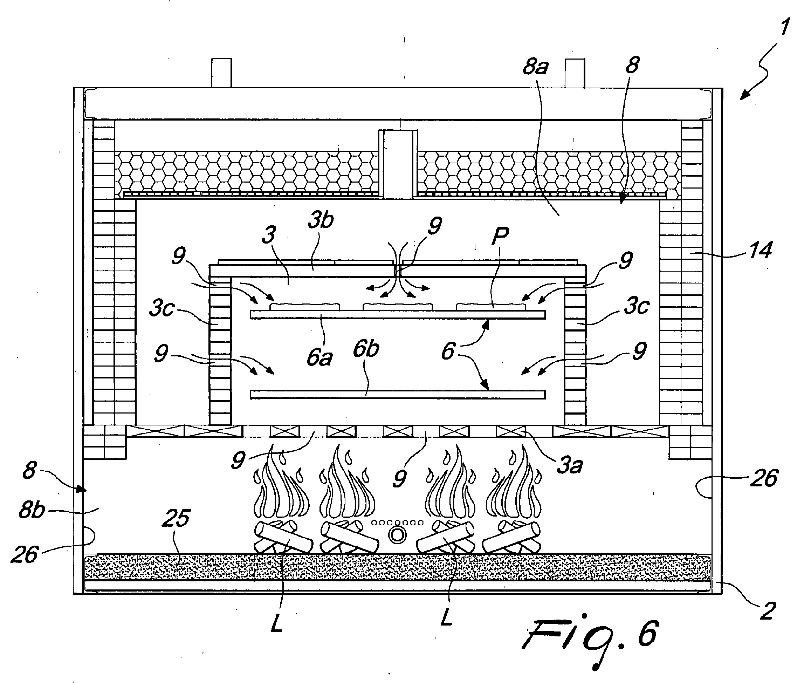

Figure 6 is a sectional view, taken along the line VI-VI of Figure 3;

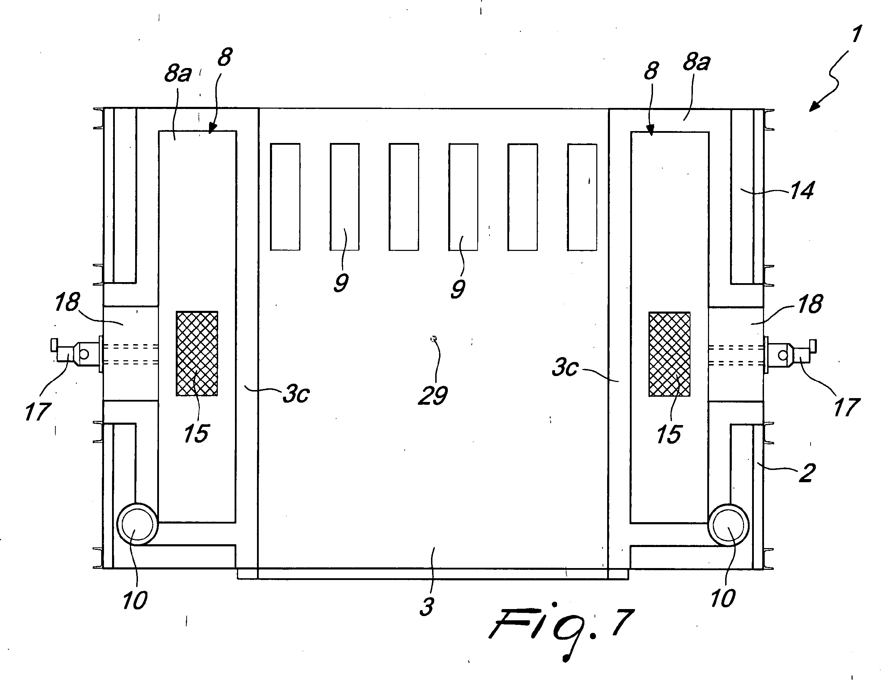

Figure 7 is a sectional view, taken along the line VII-VII of Figure 5;
Figure 8 is a transverse sectional view, shown partly in phantom lines, of a portion of the oven according to the invention with the feeder means arranged outside the combustion chamber;
Figure 9 is a transverse sectional view, shown partly in phantom lines, of a portion of the oven according to the invention with the feed means arranged inside the combustion chamber.

With reference to the figures, the reference numeral 1 generally designates an oven for the industrial cooking of foodstuffs, particularly bread, pizzas or the like.

The oven 1 comprises a frame 2 for supporting a tunnel-shaped cooking chamber 3, which is elongated longitudinally and is provided with two open mutually opposite ends which form respectively an inlet 4 and an outlet 5 for the foodstuffs.

In practice, the cooking chamber 3 is formed by the coupling of a series of longitudinal walls: a bottom wall 3a, an upper wall 3b and two side walls 3c.

In the particular embodiment of the invention shown in the figures, the foodstuffs are constituted by a series of pizzas P; however, alternative uses of the oven 1 are possible, for example for cooking bread or the like.

Inside the cooking chamber 3 there is a line 6 for the advancement of the pizzas P which lies between the inlet 4 and the outlet 5.

Such advancement line is of the type of a segmented conveyor belt, which winds around a pair of motorized cylinders 7 arranged at the ends of the cooking chamber 3 and is divided into an upper advancement portion 6a, in which the pizzas P advance, and a lower return portion 6b.

A combustion chamber 8 is associated with the frame 2 and a fuel such as wood L and/or of the gaseous type is burned therein.

The combustion chamber 8 is arranged adjacent to the walls 3a, 3b and 3c of the cooking chamber 3, and a plurality of openings 9 for the passage of the hot combustion gases from the combustion chamber 8 to the cooking chamber 3 are provided in the walls.

At least one and preferably a plurality of ducts 10 for the outflow of the combustion gases are distributed along the cooking chamber 3, and each duct is provided with a combustion gas suction port 11 which is arranged at the lower portion of the side walls 3c.

The outflow ducts 10, in detail, are distributed on opposite sides of the cooking chamber 3 and converge at a connecting manifold 12, with which pumping means for aspirating the combustion gases, such as a centrifugal fan 13, are associated.

This arrangement of the outflow ducts 10 allows in practice to circulate the hot combustion gases within the cooking chamber 3 in order to both cook the pizzas P and heat the plates of the upper portion 6a and of the lower portion 6b of the advancement line 6, achieving considerable benefits in terms of improvement of the thermal efficiency of the oven 1.

Conveniently, the combustion chamber 8 of the oven 1 is divided into a plurality of first compartments 8a and second compartments 8b for combustion, which are distributed along the cooking chamber 3.

Each first compartment 8a is delimited by a masonry structure 14, which is supported by the frame 2 around a corresponding longitudinal portion of the cooking chamber 3 and in particular lies adjacent to the upper wall 3b and the side walls 3c.

Each of the first compartments 8a comprises two bases 15 for supporting the wood L, which are adjacent to the side walls 3c on opposite sides of the cooking chamber 3.

The supporting bases are constituted by corresponding gratings on which the wood L to be burned is placed during use.

Each first compartment 8a is further provided with means 16 for removing the ash C produced by the wood L, constituted in particular by a tray for collecting ash which is arranged below each grating 15 and is associated with the frame 2 so that it can slide along a direction A₁ for insertion in, and extraction from, the first compartments 8a, which is substantially transverse with respect to the longitudinal direction of the cooking chamber 3.

The ash C produced by the combustion of the wood L in practice crosses by gravity the meshes of the gratings 15 and falls into the trays 16, from which they can be removed periodically once they have been extracted from the oven 1.

Conveniently, two first gas-fired burners 17 are arranged in each first compartment 8a on opposite sides of the cooking chamber 3 and proximate to the supporting bases 15, below them.

The first compartments 8a are further provided with two openings 18 for introducing the wood L, which are formed through the masonry structure 14 at the two supporting bases 15.

Closure means 19 of the shutter type are associated with the insertion openings 18 and are constituted for example by a corresponding door which is associated with the frame 2 so that it can slide along a substantially vertical direction A₂.

Outside the masonry structure 14, the oven 1 is provided with means 20 for feeding the wood L through the insertion openings 18.

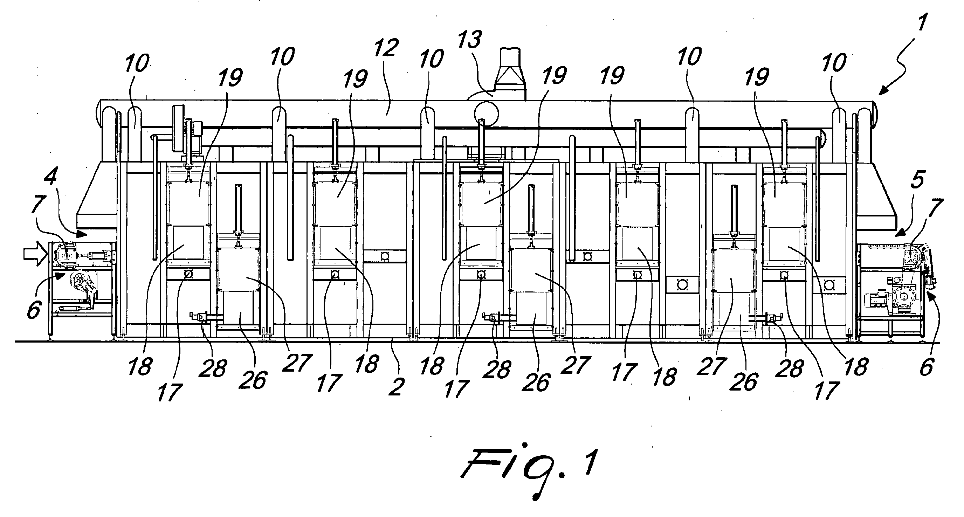

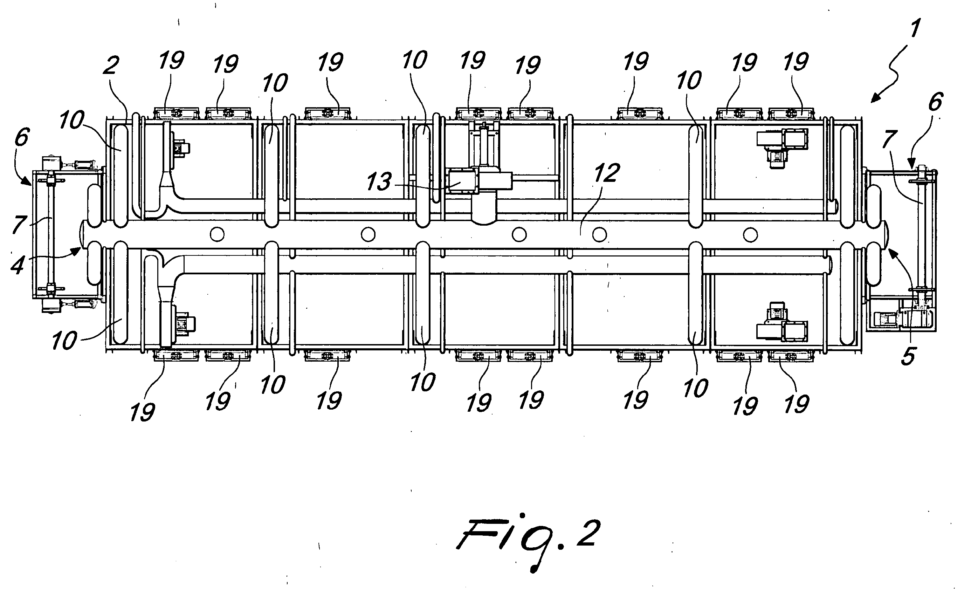

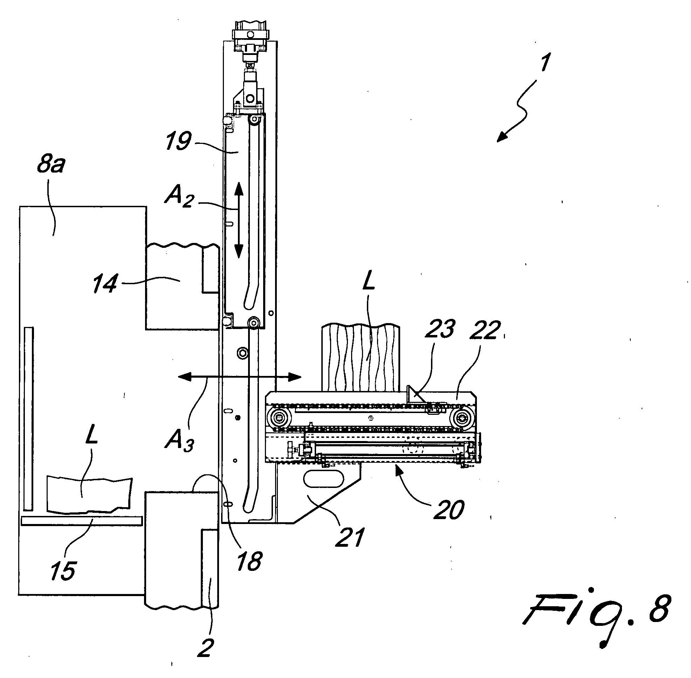

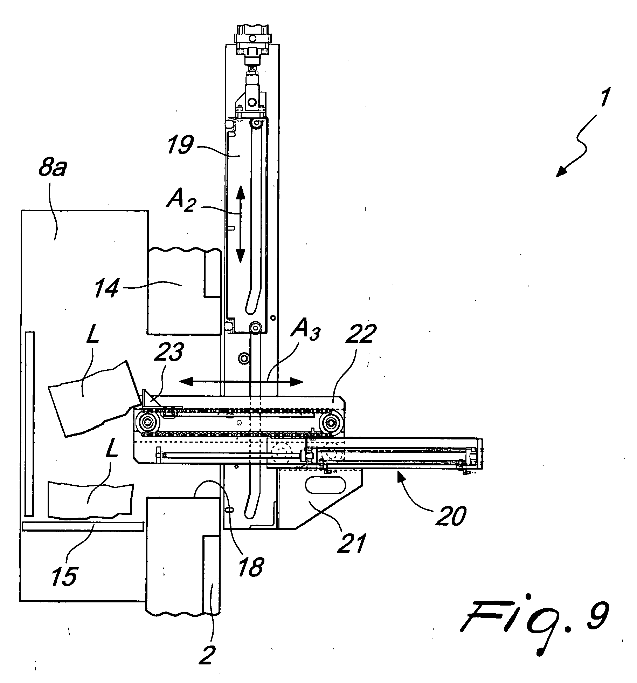

For the sake of greater clarity of the figures, the feeder means 20 are shown in detail only in Figures 8 and 9 but are not shown in Figures 1 and 2, which illustrate the oven as a whole.

The feeder means are constituted by a series of frameworks 21, which are associated with the outer walls of the first compartments 8a at each insertion opening 18, and by a corresponding number of decks 22 for loading and unloading the wood L, which are mounted on the frameworks 21 so that they can slide along a direction A₃ for insertion and extraction through the insertion openings 18.

Further, a pusher 23 is mounted slidingly on each deck 22 and is adapted to push the wood L beyond the edge of the deck in order to allow it to fall onto the supporting bases 15 after the deck 22 has been inserted in the first compartments 8a.

The second compartments 8b are arranged below the bottom wall 3a of the cooking chamber 3 and are delimited by a corresponding number of masonry partitions 24, which lie transversely to the longitudinal direction of the oven 1.

The bottom of the second compartments 8b is constituted by a slab 25 for supporting the wood L.

Wood L is inserted in the second compartments 8b through insertion openings 26, which can be closed by doors 27 and are associated with feeder means which are fully similar to the ones described earlier in relation to the first compartments 8a.

Moreover, within the second compartments 8b there are second gas-fired burners 28 arranged proximate to the slabs 25.

Advantageously, the oven 1 is provided with an automated unit for the management and control of the opening/closure of the doors 19 and 27 and of the activation of the feeder means 20 and of the burners 17 and 28: said unit, of the kind of a PLC and/or computer, is not shown in detail in the figures.

The operation of the automated management and control unit and therefore of the closure means 19 and 27, of the feeder means 20 and of the burners 17 and 28 is controlled by means for detecting the temperature inside the cooking chamber 3 and the combustion chamber 8, which are of the type of a series of thermocouples 29 distributed along the oven 1.

Depending on requirements, the operation of the oven 1 provides for the combustion of just wood L, just fuel gas, or a combination, i.e., by burning both fuels.

The combustion gases generated within the combustion chamber 8 cross the passage openings 9 and enter the cooking chamber 3, in which they heat the pizzas P.

The exhaust gases that arrive from the first compartments 8a, in particular, cross the cooking chamber 3 and are transferred to the intake ports 11, first cooking the pizzas P and then heating the advancement line 6, before exiting through the outflow ducts 10 at a relatively low temperature.

The exhaust gases that arrive from the second compartments 8b are instead directed so as to heat directly the lower portion 6b of the advancement line 6; however, in certain operating conditions the heat transmitted by the exhaust gases that arrive from the first compartments 8a is sufficient to complete the cooking of the pizzas P and efficiently heat the advancement line 6, thus allowing to limit the consumption of fuel in the second compartments 8b.

The operation of the oven is entrusted to a program of the automated management and control unit, which controls switching on and off at preset times and the automatic management of the temperatures in the various regions of the oven 1 by controlling the supply of fuels in the compartments 8a and 8b, allowing uniform cooking on all the advancing pizzas P even if the cooking chamber 3 is considerably wide.

In this regard, it is noted that when the temperature detected in a given point of the oven 1 drops below the value provided by the program, the system reacts automatically by feeding gas to the corresponding burners 17 and 28 and/or introducing more wood L.

In this last case, the following actions are actuated in sequence: opening of the door or doors 19 and 27, introduction of the wood L by virtue of the feeder means 20 and then closure of the door or doors 19 and 27, the presence of the operator being required only for depositing a piece of wood L on the deck or decks 22.

Further, combustion of the wood L is managed by controlling the combustion air which is introduced in the compartments 8a and 8b, so as to achieve maximum heating efficiency of the wood L; conveniently, such air is introduced by the burners 17 and 28, which in the specific case are used as blowers.

In practice it has been found that the described invention achieves the intended aim and objects.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

## Claims

1. An oven (1) for the industrial cooking of foodstuffs, particularly bread, pizzas or the like, comprising at least one frame (2) for supporting a cooking chamber (3) which is formed by the coupling of a series of longitudinal walls comprising a bottom wall (3a), an upper wall (3b) and two side walls (3c), said chamber (3) being provided with at least one inlet (4) and at least one outlet (5) for the foodstuffs (P), a line (6) for the advancement of the foodstuffs (P) within said cooking chamber (3) between said inlet (4) and said outlet (5), at least one chamber (8) for the combustion of at least one fuel comprising wood (L) and/or a gaseous type fuel, which is associated with said frame (2) and is arranged adjacent to said bottom, upper and side walls (3a,3b,3c) of said cooking chamber (3) and there being provided in said bottom, upper and side walls (3a,3b,3c) a plurality of openings (9) for the passage of the combustion gases from said combustion chamber (8) to said cooking chamber (3), the oven (1) further comprising at least one duct (10) for the outflow of the combustion gases from said cooking chamber (3), which is provided with a gas intake port (11) arranged at the lower portion of said cooking chamber (3).

2. The oven (1) according to claim 1, **characterized in that** it comprises pumping means (13) for aspirating the exhaust gases which are arranged along said outflow duct (10).

3. The oven (1) according to one or more of the preceding claims, **characterized in that** it comprises a plurality of said outflow ducts (10) distributed along said chamber (3).

4. The oven (1) according to one or more of the preceding claims, **characterized in that** said outflow ducts (10) are distributed on opposite sides (3c) of said cooking chamber (3).

5. The oven (1) according to one or more of the preceding claims, **characterized in that** said cooking chamber (3) is elongated and is provided with two open ends which form respectively said inlet (4) and said outlet (5).

6. The oven (1) according to one or more of the preceding claims, **characterized in that** said combustion chamber (3) comprises at least one first compartment (8a) which is adjacent to the side walls (3c) and upper wall (3b) of at least one longitudinal portion of said cooking chamber (3).

7. The oven (1) according to claim 6, **characterized in that** said first compartment (8a) comprises at least one base (15) for supporting wood (L) which is arranged adjacent to at least one of the side walls (3c) of said cooking chamber (3).

8. The oven (1) according to claim 7, **characterized in that** said supporting base (15) comprises a grating.

9. The oven (1) according to one or more of the preceding claims 6-8, **characterized in that** said first compartment (8a) comprises means (16) for removing the ash generated by the wood (L).

10. The oven (1) according to claim 9, **characterized in that** said removal means comprise at least one tray (16) for collecting ash which is arranged below said grating (15) and is associated with said frame (2) so that it can slide in the direction (A₁) for insertion in, and extraction from, said first compartment (8a).

11. The oven (1) according to one or more of the preceding claims 6-8, **characterized in that** said first compartment (8a) comprises at least one first gas-fired burner (17) which is arranged proximate to said supporting base (15).

12. The oven (1) according to claim 11, **characterized in that** said first burner (17) is arranged below said grating (15).

13. The oven (1) according to claim 7, **characterized in that** said first compartment (8a) comprises at least two of said supporting bases (15) which are arranged on opposite sides (3c) of said cooking chamber (3).

14. The oven (1) according to claim 11, **characterized in that** said first compartment (8a) comprises at least two of said first burners (17) which are arranged on opposite sides (3c) of said cooking chamber (3).

15. The oven (1) according to one or more of the preceding claims 6-14, **characterized in that** said combustion chamber (8) comprises at least one second compartment (8b), which is arranged below the bottom wall (3a) of a longitudinal portion of said cooking chamber (3).

16. The oven (1) according to claim 15, **characterized in that** said second compartment (8b) comprises a slab (25) for supporting the wood (L).

17. The oven (1) according to one or more of the preceding claims 15-16, **characterized in that** said second compartment (8b) comprises at least one second gas-fired burner (28) which is arranged proximate to said floor.

18. The oven (1) according to one or more of the preceding claims 15-17, **characterized in that** said combustion chamber (8) comprises a plurality of said first and second compartments (8a,8b) which are distributed along said cooking chamber (3).

19. The oven (1) according to one or more of the preceding claims 15-18, **characterized in that** at least one of said first and second compartments (8a,8b) is provided with a wood insertion opening (18,26) associated with closure means (19,27).

20. The oven (1) according to claim 19, **characterized in that** said closure means (19,27) are of the shutter type.

21. The oven (1) according to claim 20, **characterized in that** said closure means comprise at least one door (19) which is associated with said frame (2) so that it can slide along a substantially vertical direction (A₂).

22. The oven (1) according to one or more of the preceding claims, **characterized in that** it comprises means (20) for feeding the wood (L) through said insertion opening (18).

23. The oven (1) according to claim 22, **characterized in that** said feeder means (20) comprise a framework (21) which is associated with the outer walls of at least one of said compartments (8a,8b) and at least one deck (22) for loading and unloading the wood (L), which is mounted so that it can slide on said framework (21) in the direction (A₃) for insertion and extraction through said insertion opening (18).

24. The oven (1) according to claim 23, **characterized in that** said feeder means (20) comprise at least one pusher (23) which is associated so that it can slide on said deck (22) and is adapted to push the wood (L) into said compartments (8a,8b).

25. The oven (1) according to one or more of the preceding claims, **characterized in that** it comprises means (29) for detecting the temperature inside said cooking chamber (3) and/or said combustion chamber (8).

26. The oven (1) according to claim 25, **characterized in that** it comprises an automated unit for the management and control of said closure means (19), said feeder means (20) and said burners (17,28) which is controlled by said temperature sensing means (29).

27. The oven (1) according to one or more of the preceding claims, **characterized in that** said advancement line (6) is of the type of a segmented conveyor belt (6a,6b).

## Patentansprüche

1. Ofen (1) zum industriellen Backen von Nahrungsmitteln, insbesondere Brot, Pizza oder dergleichen, mit mindestens einem Rahmen (2) zur Aufnahme eines Garraumes (3), der durch das Verbinden einer Reihe von Längswänden mit einer unteren Wand (3a), einer oberen Wand (3b) und zwei Seitenwänden (3c) gebildet wird, wobei die Kammer (3) mit mindestens einem Eintritt (4) und mit mindestens einem Austritt (5) für die Nahrungsmittel (P), einem Förderband (6) für das Vorrücken der Nahrungsmittel (P) in dem Garraum (3) zwischen dem Eintritt (4) und dem Austritt (5), mit mindestens einer Kammer (8) für die Verbrennung von mindestens einem Brennstoff aus Holz (L) und/oder einem gasförmigen Brennstoff versehen ist, die mit dem Rahmen (2) verbunden und neben der unteren Wand, der oberen Wand und den Seitenwänden (3a, 3b, 3c) des Garraumes (3) angeordnet ist, und wobei in der unteren Wand, der oberen Wand und in den Seitenwänden (3a, 3b, 3c) eine Vielzahl von Öffnungen (9) für die Durchführung der Verbrennungsgase von der Brennkammer (8) zu dem Garraum (3) vorgesehen sind, wobei der Ofen (1) weiterhin mindestens einen Kanal (10) für den Austritt der Verbrennungsgase aus dem Garraum (3) besitzt, der mit einer Gaseinlassöffnung (11) versehen ist, die an dem unteren Abschnitt des Garraumes (3) angeordnet ist.

2. Ofen (1) nach Anspruch 1, **dadurch gekennzeichnet, dass** er Pumpelemente (13) zum Absaugen der Abgase besitzt, die entlang dem Austrittskanal (10) angeordnet sind.

3. Ofen (1) nach einem oder mehreren der vorhergehenden Ansprüche, **dadurch gekennzeichnet, dass** er eine Vielzahl von Austrittskanälen (10) besitzt, die entlang dem Garraum (3) verteilt sind.

4. Ofen (1) nach einem oder mehreren der vorhergehenden Ansprüche, **dadurch gekennzeichnet, dass** die Austrittskanäle (10) an gegenüberliegenden Seiten (3c) des Garraumes (3) verteilt sind.

5. Ofen (1) nach einem oder mehreren der vorhergehenden Ansprüche, **dadurch gekennzeichnet, dass** der Garraum (3) langgestreckt ist, und mit zwei offenen Enden versehen ist, die jeweils den Eintritt (4) und den Austritt (5) bilden.

6. Ofen (1) nach einem oder mehreren der vorhergehenden Ansprüche, **dadurch gekennzeichnet, dass** die Brennkammer (3) mindestens einen ersten Raum (8a) aufweist, der an die Seitenwände (3c) und an die obere Wand (3b) des mindestens einen Längsabschnittes des Garraumes (3) angrenzt.

7. Ofen (1) nach Anspruch 6, **dadurch gekennzeichnet, dass** der erste Raum (8a) mindestens eine Grundfläche (15) zur Aufnahme von Holz (L) aufweist, die angrenzend an mindestens eine Seite der Seitenwände (3c) des Garraumes (3) angeordnet ist.

8. Ofen (1) nach Anspruch 7, **dadurch gekennzeichnet, dass** die Grundfläche (15) einen Rost aufweist.

9. Ofen (1) nach einem oder mehreren der vorhergehenden Ansprüche 6 bis 8, **dadurch gekennzeichnet, dass** der erste Raum (8a) Mittel (16) zum Entfernen der durch das Holz (L) erzeugten Asche aufweist.

10. Ofen (1) nach Anspruch 9, **dadurch gekennzeichnet, dass** die Abzugsmittel mindestens eine Wanne (16) zum Auffangen der Asche aufweisen, die unter dem Rost (15) angeordnet und mit dem Rahmen (2) verbunden ist, so dass sie in die Richtung (A₁) zum Einführen in den ersten Raum (8a) und zum Herausziehen aus dem ersten Raum (8a) geschoben werden kann.

11. Ofen (1) nach einem oder mehreren der vorhergehenden Ansprüche 6 bis 8, **dadurch gekennzeichnet, dass** der erste Raum (8a) mindestens einen ersten mit Gas beheizten Brenner (17) aufweist, der in der Nähe der Grundfläche (15) angeordnet ist.

12. Ofen (1) nach Anspruch 11, **dadurch gekennzeichnet, dass** der erste Brenner (17) unter dem Rost (15) angeordnet ist.

13. Ofen (1) nach Anspruch 7, **dadurch gekennzeichnet, dass** der erste Raum (8a) mindestens zwei der Grundflächen (15) aufweist, die auf gegenüberliegenden Seiten (3c) des Garraumes (3) angeordnet sind.

14. Ofen (1) nach Anspruch 11, **dadurch gekennzeichnet, dass** der erste Raum (8a) mindestens zwei der ersten Brenner (17) aufweist, die auf gegenüberliegenden Seiten (3c) des Garraumes (3) angeordnet sind.

15. Ofen (1) nach einem oder mehreren der vorhergehenden Ansprüche 6 bis 14, **dadurch gekennzeichnet, dass** die Brennkammer (8) mindestens einen zweiten Raum (8b) aufweist, der unter der unteren Wand (3a) eines Längsabschnittes des Garraumes (3) angeordnet ist.

16. Ofen (1) nach Anspruch 15, **dadurch gekennzeichnet, dass** der zweite Raum (8b) eine Platte (25) zur Aufnahme des Holzes (L) besitzt.

17. Ofen (1) nach einem oder mehreren der vorhergehenden Ansprüche 15 bis 16, **dadurch gekennzeichnet, dass** der zweite Raum (8b) mindestens einen zweiten mit Gas beheizten Brenner (28) aufweist, der in der Nähe des Bodens angeordnet ist.

18. Ofen (1) nach einem oder mehreren der vorhergehenden Ansprüche 15 bis 17, **dadurch gekennzeichnet, dass** die Brennkammer (8) eine Vielzahl von ersten und zweiten Räumen (8a, 8b) besitzt, die entlang dem Garraum (3) angeordnet sind.

19. Ofen (1) nach einem oder mehreren der vorhergehenden Ansprüche 15 bis 18, **dadurch gekennzeichnet, dass** mindestens einer der ersten und zweiten Räume (8a, 8b) mit einer Holzeinschuböffnung (18, 26) versehen ist, die mit Verschlusselementen (19, 27) verbunden ist.

20. Ofen (1) nach Anspruch 19, **dadurch gekennzeichnet, dass** es sich bei den Verschlusselementen (19, 27) um Klappenelemente handelt.

21. Ofen (1) nach Anspruch 20, **dadurch gekennzeichnet, dass** das Verschlusselement mindestens eine Tür (19) aufweist, die mit dem Rahmen (2) verbunden ist, so dass sie entlang einer im wesentlichen vertikalen Richtung (A₂) verschoben werden kann.

22. Ofen (1) nach einem oder mehreren der vorhergehenden Ansprüche, **dadurch gekennzeichnet, dass** er Elemente (20) zum Zuführen des Holzes (L) durch die Einschuböffnung (18), aufweist.

23. Ofen (1) nach Anspruch 22, **dadurch gekennzeichnet, dass** die Zufuhrelemente (20) eine Rahmenkonstruktion (21) aufweisen, die mit den Außenwänden des mindestens einen der Räume (8a, 8b) verbunden ist, und mindestens eine Platte (22) zum Aufladen und Abladen des Holzes (L) aufweisen, die derart montiert ist, dass sie sich an der Rahmenkonstruktion (21) zum Einschub und Abzug durch die Einschuböffnung (18) in die Richtung (A₃) verschieben kann.

24. Ofen (1) nach Anspruch 23, **dadurch gekennzeichnet, dass** die Zufuhrelemente (20) mindestens einen Schieber (23) besitzen, der derart verbunden ist, dass er sich auf der Platte (22) verschieben kann, und dazu dient, das Holz (L) in die Räume (8a, 8b) zu stoßen.

25. Ofen (1) nach einem oder mehreren der vorhergehenden Ansprüche, **dadurch gekennzeichnet, dass** er Elemente (29) zum Erfassen der Temperatur in dem Garraum (3) und/oder in der Brennkammer (8) besitzt.

26. Ofen (1) nach Anspruch 25, **dadurch gekennzeichnet, dass** er eine automatisierte Anlage zur Steuerung und Regelung der Verschlusselemente (19), der Zufuhrelemente (20) und der Brenner (17, 28) aufweist, die durch die Temperaturabtastelemente (29) gesteuert wird.

27. Ofen (1) nach einem oder mehreren der vorhergehenden Ansprüche, **dadurch gekennzeichnet, dass** es sich bei dem Förderband (6) um einen segmentierten Bandförderer (6a, 6b) handelt.

## Revendications

1. Four (1) pour la cuisson industrielle d'aliments, particulièrement du pain, des pizzas ou analogues, comprenant au moins un bâti (2) pour supporter une chambre de cuisson (3) qui est formée par l'accouplement d'une série de parois longitudinales comprenant une paroi inférieure (3a), une paroi supérieure (3b) et deux parois latérales (3c), ladite chambre (3) étant pourvue d'au moins une entrée (4) et d'au moins une sortie (5) pour les aliments (P), une ligne (6) pour l'avancement des aliments (P) à l'intérieur de ladite chambre de cuisson (3) entre ladite entrée (4) et ladite sortie (5), au moins une chambre (8) pour la combustion d'au moins un combustible comprenant du bois (L) et/ou un combustible de type gazeux, qui est associée audit bâti (2) et est agencée de façon adjacente auxdites parois inférieure, supérieure et latérales (3a, 3b, 3c) de ladite chambre de cuisson (3) et une pluralité d'ouvertures (9) prévues dans lesdites parois inférieure, supérieure et latérales (3a, 3b, 3c) pour le passage des gaz de combustion de ladite chambre de combustion (8) à ladite chambre de cuisson (3), le four (1) comprenant en outre au moins une conduite (10) pour la sortie des gaz de combustion à partir de ladite chambre de cuisson (3), qui est pourvue d'un orifice d'admission de gaz (11) agencé dans la partie inférieure de ladite chambre de cuisson (3).

2. Four (1) selon la revendication 1, **caractérisé en ce qu'**il comprend des moyens de pompage (13) pour aspirer les gaz d'échappement, qui sont agencés le long de ladite conduite de sortie (10).

3. Four (1) selon une ou plusieurs des revendications précédentes, **caractérisé en ce qu'**il comprend une pluralité desdites conduites de sortie (10) distribuées le long de ladite chambre (3).

4. Four (1) selon une ou plusieurs des revendications précédentes, **caractérisé en ce que** lesdites conduites de sortie (10) sont distribuées sur des côtés opposés (3c) de ladite chambre de cuisson (3).

5. Four (1) selon une ou plusieurs des revendications précédentes, **caractérisé en ce que** ladite chambre de cuisson (3) est allongée et est pourvue de deux extrémités ouvertes qui forment respectivement ladite entrée (4) et ladite sortie (5).

6. Four (1) selon une ou plusieurs des revendications précédentes, **caractérisé en ce que** ladite chambre de combustion (3) comprend au moins un premier compartiment (8a) qui est adjacent aux parois latérales (3c) et à la paroi supérieure (3b) d'au moins une partie longitudinale de ladite chambre de cuisson (3).

7. Four (1) selon la revendication 6, **caractérisé en ce que** ledit premier compartiment (8a) comprend au moins une base (15) pour supporter du bois (L), qui est agencée de façon adjacente à au moins une des parois latérales (3c) de ladite chambre de cuisson (3).

8. Four (1) selon la revendication 7, **caractérisé en ce que** ladite base de support (15) comprend une grille.

9. Four (1) selon une ou plusieurs des revendications précédentes 6 à 8, **caractérisé en ce que** ledit premier compartiment (8a) comprend des moyens (16) pour éliminer les cendre produites par le bois (L).

10. Four (1) selon la revendication 9, **caractérisé en ce que** lesdits moyens d'élimination comprennent au moins un plateau (16) pour collecter des cendres, qui est agencé en dessous de ladite grille (15) et est associé audit bâti (2) pour qu'il puisse coulisser dans la direction (A₁) pour l'insertion dans ledit premier compartiment (8a), et l'extraction hors de celui-ci.

11. Four (1) selon une ou plusieurs des revendications précédentes 6 à 8, **caractérisé en ce que** ledit premier compartiment (8a) comprend au moins un premier brûleur à gaz (17) qui est agencé à proximité de ladite base de support (15).

12. Four (1) selon la revendication 11, **caractérisé en ce que** ledit premier brûleur (17) est agencé en dessous de ladite grille (15).

13. Four (1) selon la revendication 7, **caractérisé en ce que** ledit premier compartiment (8a) comprend au moins deux desdites bases de support (15), qui sont agencées sur des côtés opposés (3c) de ladite chambre de cuisson (3).

14. Four (1) selon la revendication 11, **caractérisé en ce que** ledit premier compartiment (8a) comprend au moins deux desdits premiers brûleurs (17) qui sont agencés sur des côtés opposés (3c) de ladite chambre de cuisson (3),

15. Four (1) selon une ou plusieurs des revendications précédentes 6 à 14, **caractérisé en ce que** ladite chambre de combustion (8) comprend au moins un second compartiment (8b), qui est agencé en dessous de la paroi inférieure (3a) d'une partie longitudinale de ladite chambre de cuisson (3).

16. Four (1) selon la revendication 15, **caractérisé en ce que** ledit second compartiment (8b) comprend une dalle (25) pour supporter le bois (L).

17. Four (1) selon une ou plusieurs des revendications précédentes 15 à 16, **caractérisé en ce que** ledit second compartiment (8b) comprend au moins un second brûleur à gaz (28) qui est agencé à proximité dudit sol.

18. Four (1) selon une ou plusieurs des revendications précédentes 15 à 17, **caractérisé en ce que** ladite chambre de combustion (8) comprend une pluralité desdits premier et second compartiments (8a, 8b) qui sont distribués le long de ladite chambre de cuisson (3).

19. Four (1) selon une ou plusieurs des revendications précédentes 15 à 18, **caractérisé en ce qu'**au moins un desdits premier et second compartiments (8a, 8b) est pourvu d'une ouverture d'insertion de bois (18, 26) associée à des moyens de fermeture (19, 27).

20. Four (1) selon la revendication 19, **caractérisé en ce que** lesdits moyens de fermeture (19, 27) sont du type volet.

21. Four (1) selon la revendication 20, **caractérisé en ce que** lesdits moyens de fermeture comprennent au moins une porte (19) qui est associée audit bâti (2) pour qu'elle puisse coulisser le long d'une direction sensiblement verticale (A₂).

22. Four (1) selon une ou plusieurs des revendications précédentes, **caractérisé en ce qu'**il comprend des moyens (20) pour fournir le bois (L) à travers ladite ouverture d'insertion (18).

23. Four (1) selon la revendication 22, **caractérisé en ce que** lesdits moyens d'alimentation (20) comprennent une ossature (21) qui est associée aux parois extérieures d'au moins un desdits compartiments (8a, 8b) et au moins une plateforme (22) pour charger et décharger le bois (L), qui est montée pour qu'elle puisse coulisser sur ladite ossature (21) dans la direction (A₃) pour l'insertion et l'extraction à travers ladite ouverture d'insertion (18).

24. Four (1) selon la revendication 23, **caractérisé en ce que** lesdits moyens d'alimentation (20) comprennent au moins un poussoir (23) qui est associé pour qu'il puisse coulisser sur ladite plateforme (22) et est adapté pour pousser le bois (L) dans lesdits compartiments (8a, 8b).

25. Four (1) selon une ou plusieurs des revendications précédentes, **caractérisé en ce qu'**il comprend des moyens (29) pour détecter la température à l'intérieur de ladite chambre de cuisson (3) et/ou ladite chambre de combustion (8).

26. Four (1) selon la revendication 25, **caractérisé en ce qu'**il comprend une unité automatisée pour la gestion et la commande desdits moyens de fermeture (19), desdits moyens d'alimentation (20) et desdits brûleurs (17, 28), qui est commandée par lesdits moyens de détection de température (29).

27. Four (1) selon une ou plusieurs des revendications précédentes, **caractérisé en ce que** ladite ligne d'avance (6) est du type d'une courroie transporteuse segmentée (6a, 6b).
